# EUROPÄISCHE PATENTSCHRIFT

(11) **EP 3 539 388 B1**
(45) Veröffentlichungstag und Bekanntmachung des Hinweises auf die Patenterteilung: **19.05.2021**
(21) Anmeldenummer: 18161179.9
(22) Anmeldetag: 12.03.2018
(51) Int. Cl.: A23C 19/05, A23C 19/068, A23C 19/09, A01J 25/00, A23C 7/04

(54) **VERFAHREN ZUR HERSTELLUNG VON PASTA FILATA KÄSEPRODUKTEN**
METHOD OF PRODUCING PASTA FILATA CHEESE PRODUCTS
PROCÉDÉ DE PRÉPARATION DE PRODUITS FROMAGE DU TYPE PASTA FILATA

(43) Veröffentlichungstag der Anmeldung: 18.09.2019
(73) Patentinhaber: DMK Deutsches Milchkontor GmbH, 27404 Zeven (DE)
(72) Erfinder: van der Velde, Henk, 8506CA Haskerhorne (NL); Mankiewitz, Ralf, 24363 Holtsee (DE); Tiedemann, Deyk, 27432 Nieder Ochtenhausen (DE)
(74) Vertreter: Fabry, Bernd

(56) Entgegenhaltungen:
- DE-A1- 3 217 310
- US-A1- 2003 152 686
- Anonymous: "Tetra Tebel Pasta Filata Efficiency line solution", , 1. Januar 2010 (2010-01-01), Seiten 1-4, XP055388441, Gefunden im Internet: URL:file:///C:/Users/DB52148/AppData/Local /Temp/pd10331en_tetra_tebel_pasta_filata.p df [gefunden am 2017-07-06]
- Tamine A.Y. ET AL: In: "Yoghurt, Science and Technology. 2nd ed.", 1. Januar 1999 (1999-01-01), Woodhead Publishing, XP055263999, Seiten 11-35, * Seite 16, Absatz 3-5 *
- MOSHE ROSENBERG: "Current and future applications for membrane processes in the dairy industry", TRENDS IN FOOD SCIENCE & TECHNOLOGY, Bd. 6, Nr. 1, 1. Januar 1995 (1995-01-01), Seiten 12-19, XP055197852, ISSN: 0924-2244, DOI: 10.1016/S0924-2244(00)88912-8
- MICHELE FACCIA: "Influence of the Milk Bactofugation and Natural Whey Culture on the Microbiological and Physico-Chemical Characteristics of Mozzarella Cheese", JOURNAL OF FOOD PROCESSING & TECHNOLOGY, Bd. 04, Nr. 04, 1. Januar 2013 (2013-01-01), XP55490533, DOI: 10.4172/2157-7110.1000218

## Beschreibung

### GEBIET DER ERFINDUNG

Die Erfindung befindet sich auf dem Gebiet der Milch- und Käseprodukte und betrifft ein Verfahren zur Herstellung eines Mozzarellas, der sich durch verbesserte Gebrauchseigenschaften auszeichnet.

### STAND DER TECHNIK

Mozzarella (von italienisch *mozzarella* Verkleinerungsform von *mozza* = Frischkäse oder *mozzare* = trennen) ist ein ursprünglich italienischer Pasta-Filata-Käse aus der Milch des Wasserbüffels oder des Hausrinds oder einem Gemisch beider Milcharten. Der Fettgehalt beträgt 50 Gew.-% (Büffel) oder 45 Gew.-% (Kuh) Fett in der Trockenmasse. Kuhmilch-Mozzarella ist heute weit verbreitet und wird an vielen Orten der Welt gekäst, da der Herstellungsort nicht festgelegt ist. Die EU hat dem echten Büffelmozzarella das Prädikat "geschützte Ursprungsbezeichnung" (*g.U.,* italienisch *DOP*) verliehen. Dieser Mozzarella darf nur in einem genau beschriebenen Gebiet hergestellt werden.

Mit einer Reifezeit von nur einem bis drei neun Tagen handelt es sich bei Mozzarella um einen Frischkäse, der jedoch auf speziellem Wege hergestellt wird. Anders als bei der Herstellung von Schnittkäse, in deren Verlauf die Formgebung durch einen Pressvorgang erfolgt, wird Mozzarella einer Temperaturbehandlung unterworfen, damit er seine typische feste aber weiche Form erhält. Dazu lässt man den Käsebruch zunächst eine Zeitlang, anschließend wird er mit etwa 60 bis 90 °C heißem Wasser oder Dampf abgebrüht und danach geknetet und gezogen, bis er weich, geschmeidig und formbar ist. Danach wird er in Stücke geschnitten und zu Kugeln, Blöcke, Brote oder Strängen geformt. Das fertige Produkt wird in Salzlake oder Molke schwimmend aufbewahrt und gehandelt, damit es seinen kräftigen und salzigen Geschmack behält. Anders als bei Schnittkäse ist die Mitverwendung von Calciumchlorid zur Erhöhung der Festigkeit nicht zulässig.

Frisch und jung ist der Käseteig geschmeidig und lässt sich gut aufschneiden, später wird er weicher und breiiger und auch ausgeprägter in Aroma und Geschmack. Neben dem direkten Verzehr hat Mozzarella in der italienischen Küche jedoch auch eine große Bedeutung für die Herstellung von Pizza. Kein anderer Käse zieht solche Fäden und erlaubt eine knusprige Bräunung ohne geschmackliche Beeinträchtigung, wie eben Mozzarella. Allerdings finden sich bei den im Markt befindlichen Produkten erhebliche qualitative Unterschiede: manche Sorten erweisen sich als praktisch geschmacksfrei oder weisen sogar einen leicht muffigen Geschmack auf, andere habe eine starke Tendenz, Wasser aufzunehmen und dieses im ungeeigneten Moment wieder auszuscheiden ("ausölen"). Dritte sind so weich, dass sie sich weder schneiden noch raspeln lassen oder ziehen keine Fäden. Anere bräunen nicht, sondern verkohlen.

Gerade wegen seiner einzigartigen thermo-physikalischen Eigenschaften und seines besonderen Geschmacks besteht aber ein besonderer Bedarf an solchen Mozzarella-Qualitäten, die diese besonderen Eigenschaften auch tatsächlich vereinigen.

### Relevanter Stand der Technik

Aus den beiden Schriften EP 0535268 B1 und EP 0809441 B1 (LEPRINO) ist ein Mozzarella-Produkt bekannt, welches auf folgendem Wege erhalten wird::a) Pasteurisieren von Kuh- oder Büffelmilch; b) Ansäuern der Milch zur Überführung in eine Käsemilch ;c) Koagulieren der Käsemilch, so dass man ein Koagulum aus Käsebruch und Molke erhält; d) Zerschneiden des Koagulums und Abtropfen der Molke, wobei ein Käsebruch zurückbleibt; e) Erhitzen, Kneten und Ausziehen des Käsebruchs, bis er eine homogene fibröse Masse von erhitztem unreifem Käse ist; f) Informbringen des erhitzten Käses; g) Kühlen des geformten Käses in kaltem Salzwasser; und h) Entfernen des gekühlten Käses aus dem Salzwasser; wobei, zwischen den Schritten (e) und (f) eine geringe Menge mindestens eines Käsezusatzes in den erhitzten Käse gemischt wird.

Gegenstand der EP 1576886 B1 (KRAFT) ist ein Verfahren zur Herstellung von Pasta-Filata-Käseprodukten vom Mozzarella-Typ, umfassend die Schritte a) Bereitstellen von Käsebruch, b) Erwärmen, Kneten und Ausziehen des Käsebruchs zusammen mit beliebigen gewünschten Zutaten, c) Extrudieren des Käseprodukts und d) Abkühlen des Käseprodukts in kalter Salzlake,

Aus der EP 2168429 B1 (BÜHLER) ist ein Verfahren zum Herstellen eines fermentierten Milchprodukts, insbesondere Mozzarella, umfassend die Schritte: a) Beschicken eines Extruders mit einem Vorprodukt, insbesondere Cagliata; b) Fördern des Vorprodukts entlang des sich innerhalb des Extruders erstreckenden Förderwegs zwischen der Beschickungsöffnung und der formgebenden Austrittsöffnung des Extruders; c) Zusetzen von Salz, insbesondere Kochsalz, zu dem Vorprodukt während des Extrusionsprozesses.

In diesem Zusammenhang sei zudem auf die deutsche Patentanmeldung DE 103 48 733 A1 (CAMPINA) verwiesen, aus der die Zugabe von stabilen Käsebruchsuspensionen im Zusammenhang mit der Herstellung von Käse bekannt ist. Die Schrift betrifft jedoch lediglich die Herstellung von Schnittkäse und nicht von Mozzarella. Des Weiteren besteht die Aufgabe der Schrift lediglich darin, die proteinreichen Käsebruchpartikel wieder in den Prozess zurückzuführen, statt sie über die Molke zu verlieren.

Das Dokument Tetra Tebel® Pasta Filata Efficiency line solutions, **2010** offenbart ein Herstellungsverfahren von Pasta Filata Käse umfassend die folgenden Schritte:
(i) Baktofugation einer standardisierten Milch, wobei das Baktofugats verworfen wird,
(ii) Pasteurisierung der Milch,
(iii) Dicklegung der Milch unter Zugabe von Starterkulturen und Lab,
(iv) Trennung der Molke und Käsebruch,
(v) Kochen des Käsebruchs, und
(vi) Formung und Kühlung des erhaltenen Produkts.

Das Dokument US 2003/0152686 A1 offenbart ein Verfahren zur Herstellung von verschiedenen Käsesorten, unter anderem Mozarella. Das Verfahren beginnt mit der Bereitstellung einer Magermilch aus Rohmilch. Nach einer Pasteurisierung wird die Magermilch unter Zugabe von Starterkulturen und Lab dickgelegt und die Molke und der Käsebruch voneinander abgetrennt. Die aus der Molke gewonnenen feinen Käsebruchpartikel werden abgetrennt und in einer Kolloidmühle oder Homogenisator mit dem nächsten Magermilch-Batch gemischt.

Das Dokument DE 32 17 310 A1 offenbart ein Verfahren zur Herstellung von Käse, bei dem Milch zentrifugiert wird, der mit Keimen angereicherte Teil von der Milch abgetrennt wird, sterilisiert wird und wiederum der Milch zugegeben wird, und sodann in üblicher Weise die zur Herstellung von Käse benötigten Handlungen durchgeführt werden, wobei der gebildete Käse derart mit einer Salzlake behandelt wird, dass ein mittlerer Salzgehalt in dem Trockenkäse von maximal 3,0% und insbesondere zwischen 0,5 und 2,5% erhalten wird.

Die Dokumente Yoghurt, Science and Technology, 1999, Seiten 11-35 und *"*Influence of the Milk Bactofugation and Natural Whey Culture on the Microbiological and Physico-Chemical Characteristics of Mozzarella Cheese", J Food Process Technol., 2013, 4(4) offenbaren die Zugabe eines sterilisierten Baktofugats zur Milch.

Die Aufgabe der vorliegenden Erfindung hat daher darin bestanden, zum einen eine neue Mozzarella-Qualität zur Verfügung zu stellen, die das komplexe physikalische und sensorische Profil vollauf erfüllt und zum anderen auch ein entsprechendes Verfahren zu entwickeln, welches eine solche Qualität ohne zusätzlichen technischen Aufwand bereitstellen kann.

### BESCHREIBUNG DER ERFINDUNG

Die Erfindung betrifft ein Verfahren zur Herstellung von Pasta Filata Käseprodukten vom Mozzarella-Typ, umfassend oder bestehend aus den folgenden Schritten:
(i) Bereitstellung von Milch;
(ii) Dicklegung der Milch unter Zugabe von Starterkulturen und/oder Labmaterialien;
(iii) Trennung der dickgelegten Milch aus Schritt (ii) in Molke und Käsebruch;
(iv) Verarbeitung der in Schritt (iii) erhaltenen Molke mit darin enthaltenen feinen Käsebruchpartikeln ("Käsestaub") zu einer stabilen Suspension mittels einer Aufarbeitung, bei der
   - die Molke vollständig oder im Wesentlichen abgetrennt wird;
   - die resultierenden trockenen oder im Wesentlichen trockenen Käsebruchpartikel in Wasser oder einem anderen Milchprodukt resuspendiert werden, und
   - die so erhaltene Suspension einer Homogenisierung unterworfen wird,
   wobei die Käsebruchpartikel in der homogenisierten Suspension einen Durchmesser von weniger als 250 µm aufweisen;
(v) Temperaturbehandlung des in Schritt (iii) erhaltenen Käsebruchs; sowie
(vi) Formung und Kühlung des in Schritt (v) erhaltenen temperaturbehandelten Produktes; welches sich dadurch auszeichnet, dass
(vii) das Verfahren vor der Trennung von Molke und Käsebruch einen weiteren Schritt enthält, bei dem die Milch einer Baktofugation unter Erhalt eines Baktofugats und einer behandelten Milch unterworfen wird;
(viii) das in Schritt (vii) erhaltene Baktofugat sterilisiert und das sterilisierte Baktofugat der behandelten Milch wieder zugesetzt wird; und
(ix) die in Schritt (iv) hergestellte Suspension entweder dem in Schritt (vii) erhaltenen Baktofugat oder dem in Schritt (viii) erhaltenen sterilisierten Baktofugat zugesetzt wird.

Überraschenderweise wurde gefunden, dass durch Zugabe der in der Molke oder einer geeigneten Flüssigkeit stabil suspendierten Käsebruchpartikel zur Käsereimilch vor der Dicklegung die Produkteigenschaften nachhaltig positiv beeinflusst werden. Insbesondere werden Stretch- und Raspelverhalten sowie die Festigkeit der Masse verbessert, die Tendenz zum Ausölen verringert, die Bräunung gesteigert und der Geschmack intensiviert. Die Beobachtungen der Anmelderin deuten dabei darauf hin, dass gerade Käsebruchpartikel, die einer Homogenisierung unterworfen worden sind, eine Partikelgrößenverteilung aufweisen, die sich besonders vorteilhaft in die Käsereimilch einarbeiten lassen und dann die gefundene Verbesserung der thermo-physikalischen Eigenschaften bewirken. Die Zugabe von mechanisch zerkleinertem Käsebruch erwies sich jedenfalls als nutzlos.

### Einsatzstoffe und Standardisierung

Geeignete Einsatzstoffe für die Herstellung der Pasta Filata Käseprodukte, speziell für Mozzarella, umfassen Rohmilch, teilentrahmte Milch und insbesondere Magermilch, wobei der Fettgehalt vorzugsweise im Bereich von 1 bis 5 Gew.-% liegt.

Als Einsatzstoff besonders bevorzugt ist die sogenannte Standardmilch (auch als standardisierte Milch bezeichnet). Hierbei handelt es sich um eine der vorgenannten Ausgangsstoffe, die durch Zugabe beispielsweise von Rahm ("Standardisierung") auf einen definierten Fett- bzw. Eiweißgehalt einstellt. Üblicherweise wird dabei auf ein Fett: Eiweiß-Verhältnis von 0,2 bis 1,2 standardisiert.

### Entkeimung

Sowohl die nicht-standardisierte als auch die standardisierte Milch enthalten Keime, insbesondere thermophile Sporen, die unter anderem der menschlichen Gesundheit abträglich sind und entsprechend der einschlägigen gesetzlichen Verordnungen, aber auch zur Qualitätsverbesserung durch geeignete Maßnahmen entfernt werden müssen. Dies geschieht durch Baktofugation.

Bei der Baktofugation wird die Milch in einer Zentrifuge ("Baktofuge") in eine keimarme Fraktion und ein Keimkonzentrat ("Baktofugat") aufgetrennt. Das Baktofugat (oder allgemeiner: Keimkonzentrat) stellt jedoch keineswegs ein Abfallprodukt dar, sondern lediglich eine hochgradig keimbelastete Milch. Das Konzentrat wird daher einer Sterilisation bei über 100 °C, typisch 120 bis 140°C unterworfen, wobei alle thermophilen Keime abgetötet werden. Anschließend wird die sterilisierte Phase wieder der keimarmen Phase zugesetzt , so dass praktisch keine Milchmenge verloren geht. In Summe wird auf diese Weise eine Milch erzeugt, deren Keimbelastung so gering ist, dass sie gesundheitlich unbedenklich ist und sowohl den gesetzlichen Vorgaben als auch den Qualitätsmaßstäben entspricht. Das auf diese Weise erhaltene Mischprodukt aus keimarmer Milch und sterilisiertem Keimkonzentrat wird im Sinne der vorliegenden Erfindung als Kesselmilch oder Käsemilch bezeichnet.

### Dicklegung und Separation

Die Dicklegung der (standardisierten) Milch erfolgt durch Zugabe von Starterkulturen und/oder Labmaterialien. Für Pasta Filata Käseprodukte im Allgemeinen und Mozzarella im Besonderen eignen sich insbesondere *Streptococcus thermophilus* und/oder *Lactobacillus thermobacterium,* wie sie beispielsweise in DE 2632832 A1 (LEPRINO) beschrieben sind. Des Weiteren wird der Milch Lab zugefügt, ein natürliches Gemisch der Enzyme Chymosin und Pepsin. Die Mengen liegen jeweils im Bereich von etwa 0,5 bis etwa 5 Gew.-% und vorzugsweise bei etwa 1 bis etwa 2 Gew.-% - bezogen auf die Kessel- bzw. Käsemilch. Durch die Starterkulturen und die Enzyme wird der pH-Wert abgesenkt und das Milcheiweiß ausgefällt. Die Separation kann in ebenfalls in üblicher Weise vorgenommen werden, wobei das für die Herstellung von Schnittkäse typische Abpressen der Molke wenig geeignet ist. Stattdessen eignen sich für diesen Zweck einfache Siebe oder vorzugsweise Drainagebänder.

### Homogenisierung und Suspensionszusatz

Die bei der Dicklegung anfallende Molke wird in der Regel zunächst durch Entrahmungsseparatoren und/oder Reinigungsseparatoren aufbereitet. Sie enthält je nach Separationsbedingungen noch unterschiedliche Mengen feine Käsebruchpartikel. Hierbei handelt es sich grundsätzlich um Wertprodukt, das in der Regel mit der minderwertigen Molke verloren geht oder in Separatoren abgeschieden und dann als B-Ware beispielsweise für die Herstellung von Schmelzkäse verwendet wird.

Eine wesentliche Erkenntnis der vorliegenden Erfindung hat indes darin bestanden, dass gerade dieses eher als Ausschuss betrachtete Material die Eigenschaft hat, die thermophysikalischen Eigenschaften von Pasta Filata Käseprodukten entscheidend zu verbessern. Zu diesem Zweck werden die Partikel homogenisiert, da eine einheitliche Partikelverteilung sich besonders günstig auf die Eigenschaften auswirkt. Der Begriff Homogenisierung ist dabei gleichbedeutend mit einer Zerkleinerung der unterschiedlich großen Partikel auf eine einheitliche Größe.

Die Homogenisierung bzw. Zerkleinerung der feinen Käsebruchpartikel kann auf verschiedene Arten erfolgen, nämlich mechanisch, thermisch oder (bio)chemisch oder durch eine Kombination zweier Verfahren. Da die Käsebruchpartikel eine Partikelgrößenverteilung aufweisen und die größten Partikel einen Durchmesser von 1 bis 2 mm aufweisen, ist eine Homogenisierung natürlich auch durch Sichten bzw. Sieben möglich.

Die mechanische Zerkleinerung kann mit Hilfe von Mitteln, wie einem Homogenisator, einer Kolloidmühle, einer Kugelmühle, einem High-Shear-Mixer und einer Scheibenmühle erfolgen, aber auch Ultraschalltechniken können eingesetzt werden. Von diesen mechanischen Mitteln wurden mit der Scheibenmühle gute Resultate erzielt. Eine Scheibenmühle ist eine Vorrichtung, in der zwei Aluminiumoxidscheiben in kurzer Entfernung parallel zueinander aufgestellt sind und sich in entgegengesetzter Richtung drehen. Eine Suspension mit darin enthaltenen feinen Käsebruchpartikeln wird kontinuierlich unter Druck zwischen den Scheiben zugeführt, und die feinen Käsebruchpartikel werden von den gegeneinander drehenden Scheiben zerkleinert. Der Abstand der Scheiben hat einen Einfluss auf die letztendlich erhaltene maximale Abmessung der zerkleinerten feinen Käsebruchpartikel.

Besonders bevorzugt ist in diesem Zusammenhang ein thermisches Zerkleinerungsverfahren, nämlich durch Erzeugung von Kavitation, bei dem die Teilchen zur Implosion gebracht werden.

Grundsätzlich kommen auch chemische oder biochemische Verfahren in Betracht, bei denen man die Partikel zunächst auflöst und dann wieder kristallisiert. Allerdings ist dies mit erheblichem Aufwand verbunden und daher weniger bevorzugt.

Für den Zweck der Erfindung ist es zweckmäßig, dem Baktofugat oder dessen Sterilisationsprodukt die homogenisierten Käsebruchpartikel in Form einer stabilen Suspension zuzusetzen. Hierunter ist zu verstehen, dass die Partikel stabil in der flüssigen Phase suspendiert vorliegen und nicht sedimentieren. Die Suspension enthält Teilchen, welche Durchmesser von weniger als 250 µm, vorzugsweise weniger als 150 µm aufweisen. Daraus folgt, dass die Teilchen zuvor auf diese Größe homogenisiert bzw. vermahlen worden sind.

Es hat sich ebenfalls als vorteilhaft erwiesen, Suspensionen zuzusetzen, die einen Anteil an festen Käsebruchpartikeln im Bereich von 1 bis 10 Gew.-% aufweisen. Bei höher konzentrierten Suspensionen steigt die Gefahr wieder, dass sich ein Bodensatz bildet.

Die Suspensionen werden erfindungsgemäß nicht der Kessel- oder Käsemilch zugesetzt, sondern entweder dem Baktofugat oder dem sterilisierten Baktofugat. Erstere Alternative ist dabei bevorzugt, weil auf diesem Wege dann auch sichergestellt wird, dass keine Keime eingeführt werden. Zusatzmengen von 1 bis 10 Gew.-% sind dabei typisch, wobei sich diese Mengenangabe zum einen auf den Käsebruchgehalt in der Suspension und zum anderen auf die behandelte Milch, der das gegebenenfalls sterilisierte Baktofugat zugesetzt wird, beziehen. Geringere Gehalte sind zwar ebenfalls möglich, aber wenig ökonomisch, größere Mengen können indes zu einem verkleben der Strukturen im Mozzarella führen.

### Weiterverarbeitung

Wie oben beschrieben wird die Kessel- oder Käsemilch nach der Dicklegung in Molke und Käsebruch getrennt. Abweichend von der Herstellung von Schnittkäse, wird die Käsebruchmasse nun jedoch nicht in Formen gepresst und im Salzbad gereift. Bei der Herstellung von Pasta Filata Käseprodukten folgt nun eine thermische Behandlung, bei dem der Käsebruch in Wasser bei 55 bis 90 °C mehrere Minuten gekocht wird und anschließend eine mechanische Behandlung, bei der der Käse gezogen-geknetet und bereits gesalzen (trocken) wird, bis er seine charakteristische Konsistenz aufweist. Erst dann wird die entstandene Masse in Formen gegeben und, in Salzlake abgefüllt und gekühlt, wobei die Kühlung durch Wasser, Salzlake und Luft erfolgt. Hierbei handelt es sich um einen in der Käseindustrie verbreiteten Standardprozess, der keine weiteren Erläuterungen benötigt.

### GEWERBLICHE ANWENDBARKEIT

Die Suspensionen enthalten Käsebruchpartikel, die einen Durchmesser von weniger als 250 µm, vorzugsweise weniger als 150 µm aufweisen. Vorzugsweise kommen solche Suspensionen zum Einsatz, die einen Feststoffgehalt -im Wesentlichen identisch mit dem Gehalt an Käsebruchpartikeln - im Bereich von 1 bis 10 Gew.-% und insbesondere 5 Gew.-% aufweisen. Die Zusatzmenge beträgt vorzugsweise ebenfalls 0,1 bis 10 Gew.-% - bezogen zum einen auf den Käsebruchgehalt in der Suspension und zum anderen auf die behandelte Milch, der das sterilisierte Baktofugat zugesetzt wird.

### BEISPIELE

### Beispiel 1

### Herstellung einer stabilen Käsebruchpartikelsuspension in Molke

100 L Molke aus der Dicklegung von Käsereimilch wurden über ein Drainageband vom Käsebruch abgetrennt und die darin enthaltenen Käsebruchpartikel (Trockenmasse ca. 5 Gew.-%), die eine Größe zwischen 0,01 und 3 mm aufwiesen, mittels Separation abgetrennt und weiter in einer Kolloidmühle sowie einem Homogenisator bis auf eine mittlere Partikelgröße von etwa 200 µm vermahlen.

### Beispiel 2

### Herstellung einer stabilen Käsebruchpartikelsuspension in Magermilch

100 L Molke aus der Dicklegung von Käsereimilch wurden über ein Drainageband vom Käsebruch abgetrennt und die darin enthaltenen Käsebruchpartikel (Trockenmasse ca. 5 Gew.-%), die eine Größe zwischen 0,01 und 3 mm aufwiesen, mittels Separation abgetrennt und weiter in einer Kolloidmühle sowie einem Homogenisator bis auf eine mittlere Partikelgröße von etwa 200 µm vermahlen. Anschließend wurde das Molkengemisch und die Käsebruchpartikel in Magermilch redispergiert.

### Beispiel 3

### Herstellung einer stabilen Käsebruchpartikelsuspension in Wasser

100 L Molke wurden wie oben beschrieben abgetrennt und in einem Verdampfer auf eine Trockenmasse von etwa 20 Gew.-% aufkonzentriert. Die anhaftende Molke wurde ausgewaschen und der Käsestaub anschließend in Wasser redispergiert, so dass wieder eine Trockenmasse von 5 Gew.-% erreicht wurde. Anschließend wurde die Suspension in einer Kolloidmühle bis auf eine mittlere Partikelgröße von etwa 150 µm vermahlen.

### Beispiel 4

### Herstellung von Mozzarella (erfindungsgemäß)

Aus 100 L standardisierte Magermilch (Eiweiß-Fett-Verhältnis von 1,1) wurde in einer Baktofuge ein Keimkonzentrat abgetrennt. Das Konzentrat wurde mit 10 L der Suspensionen aus den Beispielen 2 und 3 (1.1) versetzt und mit Hilfe eines Ultraturrax homogenisiert, über einen Zeitraum von 50 Sekunden auf 135 °C erhitzt und der verdünnten Käsereimilch wieder zugesetzt. Dem vereinigten Produkt wurden 4-10 DCU Mozzarella-Starterkultur und 8 g Lab/100L Käsereimilch zugesetzt. Nach der Dicklegung wurde die die feinen Käsebruchpartikel enthaltene Molke über ein Drainageband vom Käsebruch abgetrennt und wie oben beschrieben weiterverarbeitet. Anschließend wurde der Käsebruch mehrere Minuten bei 90 °C gekocht und dann in bekannter Weise mechanisch nachbearbeitet und schließlich geformt und gekühlt.

### Vergleichsbeispiel V1

### Herstellung von Mozzarella (nicht erfindungsgemäß)

Aus 100 L standardisierte Magermilch (Eiweiß-Fett-Verhältnis von 1,1) wurde in einer Baktofuge ein Keimkonzentrat abgetrennt. Das Konzentrat wurde mit 10 L der Suspensionen aus den Beispielen 2 und 3 (1.1) versetzt und mit Hilfe eines Ultraturrax homogenisiert, über einen Zeitraum von 50 Sekunden auf 135 °C erhitzt und der verdünnten Käsereimilch wieder zugesetzt. Dem vereinigten Produkt wurden 4-10 DCU Mozzarella-Starterkultur und 8 g Lab/100L Käsereimilch zugesetzt. Nach der Dicklegung wurde die die feinen Käsebruchpartikel enthaltene Molke über ein Drainageband vom Käsebruch abgetrennt. Anschließend wurde der Käsebruch mehrere Minuten bei 90 °C gekocht und dann in bekannter Weise mechanisch nachbearbeitet und schließlich geformt und gekühlt. In diesem Vergleichsbeispiel erfolgte also keine Zugabe der homogenisierten Käsestaubsuspension.

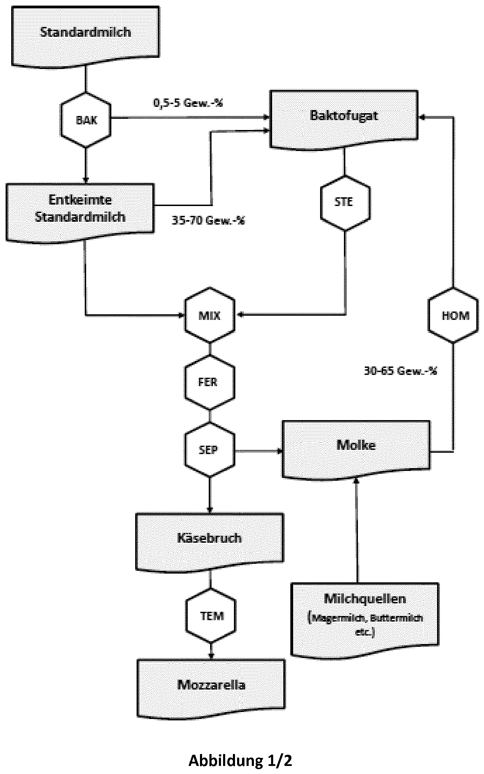

Das erfindungsgemäße Verfahren wird in **Abbildung 1** auch noch einmal exemplarisch mit Hilfe eines Fließschemas erläutert. Dabei steht (BAK) für Baktofuge, (MIX) für Mischer, (FER) für Fermenter, (SEP) für Separator, (HOM) für Homogenisator und (TEM) für den Kocher/Stretcher.

### Beispiel 5

### Verkostung

Muster von zwei Mozzarella-Qualitäten, nämlich gemäß dem erfindungsgemäßen Beispiel 1 sowie dem Vergleichsbeispiel V1 wurden von einem Panel bestehend aus 5 geschulten Nahrungsmitteltechnikern bezüglich ihrer thermophysikalischen und sensorischen Eigenschaften beurteilt, nämlich
(A) Geschmacksqualität (Intensität)
(B) Geruchqualität (keine störenden Aromen)
(C) Stabilität gegen Wasserverlust
(D) Härte
(E) Stretchverhalten (bei Pizzaanwendung)
(F) Bräunungsverhalten (bei Pizzaanwendung)

Die Beurteilung erfolgte auf einer Skala von 1 (= gering) bis 5 (= stark ausgeprägt). Die Ergebnisse (Mittelwerte) sind in **Tabelle 1** wiedergegeben.

**Tabelle 1**

| Ergebnisse der Verkostung | | |
|---|---|---|
| **Eigenschaft** | **4** | **V1** |
| Geschmacksqualität | 4,5 | 3,5 |
| Geruchsqualität | 4,0 | 3,5 |
| Stabilität gegen Wasserverlust | 4,0 | 3,5 |
| Härte | 4,0 | 3,0 |
| Raspelverhalten | 4,0 | 3,0 |
| Stretchverhalten | 4,0 | 2,5 |
| Bräunungsverhalten | 4,5 | 2,5 |

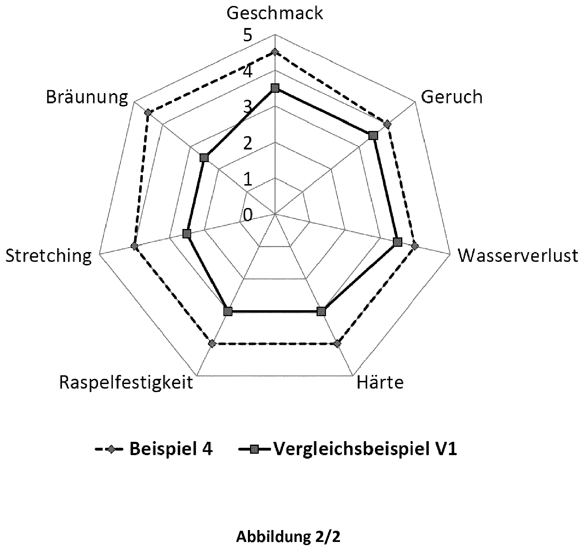

Die erfindungsgemäße Mozzarella-Qualität zeichnet sich gegenüber dem Vergleichsprodukt dadurch aus, dass es einen deutlich besseren Geschmack besitzt und praktisch keine störenden Aromen aufweist. Das Produkt nimmt weniger Wasser auf und ölt daher auch weniger aus. Es erweist sich als härter, was für das Raspelverhalten ebenfalls von Vorteil ist. In der Pizzaanwendung zieht es deutlich längere Fäden und bräunt besser, ohne Tendenz, zu verkohlen. Die Ergebnisse sind in Abbildung 2 auch noch einmal visualisiert.

## Patentansprüche

1. Verfahren zur Herstellung von Pasta Filata Käseprodukten vom Mozzarella-Typ, umfassend oder bestehend aus den folgenden Schritten:
(i) Bereitstellung von Milch;
(ii) Dicklegung der Milch unter Zugabe von Starterkulturen und/oder Labmaterialien;
(iii) Trennung der dickgelegten Milch aus Schritt (ii) in Molke und Käsebruch;
(iv) Verarbeitung der in Schritt (iii) erhaltenen Molke mit darin enthaltenen feinen Käsebruchpartikeln zu einer stabilen Suspension mittels einer Aufarbeitung, bei der
- die Molke vollständig oder im Wesentlichen abgetrennt wird;
- die resultierenden trockenen oder im Wesentlichen trockenen Käsebruchpartikel in Wasser oder einem anderen Milchprodukt resuspendiert werden, und
- die so erhaltene Suspension einer Homogenisierung unterworfen wird,
wobei die Käsebruchpartikel in der homogenisierten Suspension einen Durchmesser von weniger als 250 µm aufweisen;
(v) Temperaturbehandlung des in Schritt (iii) erhaltenen Käsebruchs; sowie
(vi) Formung und Kühlung des in Schritt (v) erhaltenen temperaturbehandelten Produktes;
**dadurch gekennzeichnet, dass**
(vii) das Verfahren vor der Trennung von Molke und Käsebruch einen weiteren Schritt enthält, bei dem die Milch einer Baktofugation unter Erhalt eines Baktofugats und einer behandelten Milch unterworfen wird;
(viii) das in Schritt (vii) erhaltene Baktofugat sterilisiert und das sterilisierte Baktofugat der behandelten Milch wieder zugesetzt wird; und
(ix) die in Schritt (iv) hergestellte Suspension entweder dem in Schritt (vii) erhaltenen Baktofugat oder dem in Schritt (viii) erhaltenen sterilisierten Baktofugat zugesetzt wird.

2. Verfahren nach Anspruch 1, **dadurch gekennzeichnet, dass** man Rohmilch, teilentrahmte Milch oder Magermilch oder Standardmilch einsetzt.

3. Verfahren nach den Ansprüchen 1 und/oder 2, **dadurch gekennzeichnet, dass** man die Milch durch Zugabe von Rahm, Magermilch, Molkensahne, Buttermilch oder Milchproteinkonzentrat standardisiert.

4. Verfahren nach Anspruch 3, **dadurch gekennzeichnet, dass** man die Milch auf ein Fett: Eiweiß-Verhältnis von 0,2 bis 1,2 einstellt.

5. Verfahren nach mindestens einem der Ansprüche 2 bis 4, **dadurch gekennzeichnet, dass** man die standardisierte Milch einer Baktofugation unterwirft.

6. Verfahren nach mindestens einem der Ansprüche 1 bis 5, **dadurch gekennzeichnet, dass** die Homogenisierung mechanisch und/oder thermisch und/oder (bio)chemisch erfolgt.

7. Verfahren nach Anspruch 6, **dadurch gekennzeichnet, dass** die Homogenisierung durch Kavitation erfolgt.

8. Verfahren nach mindestens einem der Ansprüche 1 bis 7, **dadurch gekennzeichnet, dass** die Käsebruchpartikel in der homogenisierten Suspension einen Durchmesser von weniger als 150 µm aufweisen.

9. Verfahren nach mindestens einem der Ansprüche 1 bis 8, **dadurch gekennzeichnet, dass** Suspensionen zugesetzt werden, die einen Anteil an festen Käsebruchpartikeln im Bereich von 0,1 bis 10 Gew.-% aufweisen.

## Claims

1. A process for the production of pasta filata cheese products of the Mozzarella type, comprising or consisting of the following steps:
(i) providing milk;
(ii) coagulating the milk while adding starter cultures and/or rennet material;
(iii) separating the coagulated milk of step (ii) into whey and curd;
(iv) processing the whey with fine curd particles contained therein obtained in step (iii) into a stable suspension by means of conditioning, wherein:
- whey is wholly or substantially separated;
- the resulting dry, or substantially dry, curd particles are re-suspended in water or in another dairy product; and
- the suspension such obtained is subjected to homogenisation.
wherein the curd particles have a diameter of less than 250 µm;;
(v) heat treating the curd obtained in step (iii); and
(vi) shaping and cooling the heat-treated product obtained in step (v);
wherein
(vii) before the separation of whey and curd, the process comprises the further steps of subjecting the milk to bactofugation, obtaining a bactofugate and a treated milk;
(viii) sterilising the bactofugate obtained in step (vii) and adding the sterilised bactofugate to the treated milk; and
(ix) adding the suspension produced in step (iv) either to the bactofugate obtained in step (vii) or to the sterilised bactofugate obtained in step (viii).

2. The process according to claim 1, wherein raw milk, semi-skimmed milk or skimmed milk is employed.

3. The process according to claims 1 and/or 2, wherein the milk is standardised by adding cream, skimmed milk, whey cream, buttermilk or milk protein concentrate.

4. The process according to claim 3, wherein the milk is adjusted to a fat-to-protein ratio of 0.2 to 1.2.

5. The process according to at least one of claims 2 to 4, wherein the standardised milk is subjected to filtration and/or bactofugation.

6. The process according to at least one of claims 1 to 5, wherein the homogenisation is performed mechanically and/or thermally and/or (bio)chemically.

7. The process according to claim 6, wherein the homogenisation is performed by cavitation.

8. The process according to at least one of claims 1 to 7, wherein the curd particles in the homogenised suspension have a diameter of less than 150 µm.

9. The process according to at least one of claims 1 to 8, wherein suspensions are added having a portion in solid curd particles within the range of 0.1 to 10% by weight.

## Revendications

1. Procédé de fabrication de produits de fromage à pâte filée du type mozzarella, comprenant, ou en étant constitué, les étapes suivantes :
(i) fourniture de lait,
(ii) caillage du lait avec addition de levains et/ou de présures,
(iii) séparation du lait caillé de l'étape (ii) en sérum et caillé de fromagerie,
(iv) retraitement du sérum obtenu dans l'étape (iii), avec les particules fines de caillé de fromagerie qui y sont contenues, pour obtenir une suspension stable à l'aide d'au moins un traitement dans lequel
- le sérum est en totalité ou pour l'essentiel séparé ;
- les particules de caillé de fromagerie obtenues, sèches ou pour l'essentiel sèches, sont remises en suspension dans de l'eau ou dans un autre produit laitier ;
- la suspension ainsi obtenue est soumise à une homogénéisation, les particules de caillé de fromagerie de la suspension homogénéisée présentant un diamètre inférieur à 250 µm ;
(v) traitement thermique du caillé de fromagerie obtenu dans l'étape (iii) ; et
(vi) formation et refroidissement du produit thermiquement traité obtenu dans l'étape (v) ;
**caractérisé en ce que**
(vii) le procédé comprend, avant la séparation du sérum et du caillé de fromagerie, une étape supplémentaire, dans laquelle le lait est soumis à une bactofugation, avec obtention d'un bactofugat et d'un lait traité ;
(viii) le bactofugat obtenu dans l'étape (vii) est stérilisé et le bactofugat stérilisé est de nouveau ajouté au lait traité ; et
(ix) la suspension fabriquée dans l'étape (iv) est ajoutée soit au bactofugat obtenu dans l'étape (vii), soit au bactofugat stérilisé obtenu dans l'étape (viii).

2. Procédé selon la revendication 1, **caractérisé en ce qu'**on utilise du lait cru, du lait partiellement écrémé ou du lait écrémé ou du lait standard.

3. Procédé selon les revendications 1 et/ou 2, **caractérisé en ce qu'**on standardise le lait par addition de crème, de lait écrémé, de crème de sérum, de babeurre ou d'un concentré de protéines du lait.

4. Procédé selon la revendication 3, **caractérisé en ce qu'**on ajuste le lait à un rapport matière grasse/protéine de 0,2 à 1,2.

5. Procédé selon au moins l'une des revendications 2 à 4, **caractérisé en ce qu'**on soumet le lait standardisé à une bactofugation.

6. Procédé selon au moins l'une des revendications 1 à 5, **caractérisé en ce que** l'homogénéisation est réalisée par voie mécanique et/ou thermique et/ou (bio)chimique.

7. Procédé selon la revendication 6, **caractérisé en ce que** l'homogénéisation est réalisée par cavitation.

8. Procédé selon au moins l'une de revendications 1 à 7, **caractérisé en ce que** les particules de caillé de fromagerie présentent dans la suspension homogénéisée un diamètre inférieur à 150 µm.

9. Procédé selon au moins l'une des revendications 1 à 8, **caractérisé en ce qu'**on ajoute des suspensions qui présentent une proportion de particules solides de caillé de fromagerie de 0,1 à 10 % en poids.
